# EUROPÄISCHE PATENTSCHRIFT

(11) **EP 3 289 671 B1**
(45) Veröffentlichungstag und Bekanntmachung des Hinweises auf die Patenterteilung: **17.06.2020**
(21) Anmeldenummer: 16719398.6
(22) Anmeldetag: 28.04.2016
(51) Int. Cl.: H02K 9/18, H02K 5/20, H02K 5/18

(54) **ELEKTRISCHE MASCHINE**
ELECTRICAL MACHINE
MACHINE ÉLECTRIQUE

(30) Priorität: 16.06.2015 DE 102015211048
(43) Veröffentlichungstag der Anmeldung: 07.03.2018
(73) Patentinhaber: Siemens Aktiengesellschaft, 80333 München (DE)
(72) Erfinder: LANGE, Thomas, 90766 Fürth (DE)
(86) Internationale Anmeldenummer: PCT/EP2016/059523
(87) Internationale Veröffentlichungsnummer: WO 2016/202492

(56) Entgegenhaltungen:
- DE-A1- 2 836 903
- GB-A- 516 161
- US-A- 2 536 815
- US-A- 3 461 328

## Beschreibung

Die Erfindung betrifft eine elektrische Maschine und deren Kühlung.

Elektrische Maschinen, insbesondere dynamoelektrische Maschinen, wie z.B. ein elektrischer Motor oder ein elektrischer Generator werden zur Erhöhung der Effizienz gekühlt, um Verlustwärme abzuführen.

Aus der US 2,536,815 ist eine elektrische Maschine bekannt, welche einen Rahmen aufweist, der vom Statorblechpaket beabstandet ist, wobei in dem sich daraus ergebenden Raum ein Kühlrohr geführt ist.

Aus der DE 28 36 903 A1 ist eine geschlossene elektrische Maschine mit Röhrenkühlung bekannt, deren Ständer im Abstand von einem Gehäuseblechmantel umgeben ist, der seinerseits dicht mit am Ständer abgestützten Tragringen für an diesen gehaltenen Lagerschilden verbunden ist und die Tragringe an Öffnungen mit um den Ständer symmetrisch zur Längsachse angeordneten Kühlrohren abdichtend fest verbunden sind. So ist ein geschlossener Innenraum gebildet, in dem die Innenkühlluft auf einem Teil ihres Kreislaufes über den Ständer hinweg zwischen den von Außenluft durchströmten Kühlrohren fließt, wobei die Tragringe ausschließlich von Kühlrohren getragen und diese Kühlrohre in engem Wärmekontakt mit dem Ständer gehalten sind.

Aus der GB 516,161 A ist eine dynamoelektrische Maschine bekannt, welche einen Lüfter aufweist, wobei interne heiße Luft über längsseitige Röhren zirkuliert und kühle Umgebungsluft über die Röhren und den Stator streicht.

Aus der US 3,461,328 A ist eine rotatorische elektrische Maschine bekannt, welche an ihrer Außenseite prismenartig Abstützungen aufweist. Durch Unterteilungen in den Abstützungen sind Passagen für Kühlluft ausgebildet.

Eine Aufgabe der Erfindung ist es die Kühlung der elektrischen Maschine zu verbessern.

Eine Lösung der Aufgabe ergibt sich bei einer elektrischen Maschine nach Anspruch 1. Eine weitere Lösung der Aufgabe ergibt sich bei einem Verfahren zur Kühlung einer elektrischen Maschine nach Anspruch 11.

Weiter Ausgestaltungen der Lösungen ergeben sich nach den Ansprüchen 2 bis 10, 12 und 13.

Bei einer erfindungsgemäßen elektrischen Maschine mit einem Gehäuse ist ein Rohr vorhanden. Das Rohr ist in einem Kanal, wobei das Rohr von einem ersten Kühlmedium umströmbar ist und von einem zweiten Kühlmedium durchströmbar ist. Das Rohr kann also mit zwei voneinander getrennten Kühlmedien in Kontakt sein. Zumindest eines der Kühlmedien oder auch beide Kühlmedien sind dabei beispielsweise einem Kühlkreislauf oder mehreren unterschiedlichen Kühlkreisläufen zuordenbar. Ein Kühlmedium kann beispielsweise auch Umgebungsluft sein, welche angesaugt und erwärmt wegtransportiert wird.

Die Innenluft einer elektrischen Maschine kann auch durch Luftkanäle geführt werden, die im Luftstrom einer Oberflächenkühlung der Maschine liegen. Die Kühlung erfolgt so über die Wände dieser Luftkanäle. Maßgebliche Faktoren für eine derartige Kühlung sind die am Wärmeübergang beteiligten Oberflächen und Wandstärken.

Ist nun in der elektrischen Maschine ein Rohr integriert, bzw. sind dort eine Vielzahl von Rohren integriert, dann kann der Austausch von Wärmeenergie zwischen den Kühlmedien verbessert werden.

Durch eine Integration eines oder mehrerer Rohre, insbesondere dünnwandiger Rohre, in einen Innenluftkanal der elektrisehen Maschine, kann das Rohr bzw. können die Rohre von dem ersten Kühlmedium umströmt werden von dem zweiten Kühlmedium durchströmt werden.

Durch eine Abdichtung der Rohre zu Wänden des Innenluftkanals oder der Vielzahl von Innenluftkanälen kann eine Schutzart der elektrischen Maschine erhalten bleiben. Ein Wärmeübergang zur Kühlung der Innenluft der elektrischen Maschine kann durch die Rohre zusätzlich auch über deren Wände erfolgen.

In einer Ausgestaltung der elektrischen Maschine ist die Länge des Rohres gleich oder größer der Länge eines Statorpaketes, bzw. des Statorpaketes der elektrischen Maschine. Je länger das Rohr ist, desto größer ist die Oberfläche, die dem Vorgang des Wärmeübergangs zur Verfügung gestellt werden kann.

Das Rohr, welches für den Vorgang des Wärmeübergangs zur Verfügung steht kann von unterschiedlichem Querschnitt sein. Es kann einen runden, ovalen und/oder eckigen Querschnitt aufweisen.

In einer Ausgestaltung der elektrischen Maschine ist die Länge des Kanals gleich oder größer der Länge des Statorpaketes. Die Länge des Kanals und die Längen der Rohre sind insbesondere aufeinander abgestimmt. In einer Variante sind die Rohre länger als der Kanal.

In einer Ausgestaltung der elektrischen Maschine weist der Kanal eine erste Öffnung im Bereich einer ersten Stirnseite der elektrischen Maschine und eine zweite Öffnung im Bereich einer zweiten Stirnseite der elektrischen Maschine auf. So kann ein Kühlmedium im Bereich der Stirnseiten der elektrischen Maschine in den Kanal eintreten und auf der entgegengesetzten Stirnseite wieder austreten.

In einer Ausgestaltung der elektrischen Maschine weist das Gehäuse in Umfangsrichtung Kühlrippen auf, wobei insbesondere der Kanal zwischen Kühlrippen ist. Durch Kühlrippen kann die Kühlung der elektrischen Maschine zusätzlich verbessert werden. Liegt der Kanal zwischen Kühlrippen kann dies einer kompakten Bauweise dienen.

In einer erfindungsgemäßen elektrischen Maschine ist ein Bypass zur Führung des ersten Kühlmediums vorgesehen. Durch den Bypass können unterschiedliche Kanäle im Bereich einer Stirnseite des Statorpaketes miteinander verbunden werden.

In einer Ausgestaltung der elektrischen Maschine ist eine Kanalwand des Kanals eine Außenwand der elektrischen Maschine ist. Dadurch lässt sich z.B. die Kühlleistung erhöhen. Es ist aber auch möglich so einen kompakten Aufbau der elektrischen Maschine zu realisieren.

In einer erfindungsgemäßen elektrischen Maschine weist diese einen Standfuß oder mehrere Standfüße auf. Dabei ist zumindest ein Standfuß derart ausgebildet, dass zwischen Standfuß und Statorblechpaket der Kanal ist. So wird erreicht, dass die elektrische Maschine kompakt aufgebaut ist und der Kühlkreislauf für das Kühlmedium im Kanal nicht klein bleibt.

In einer erfindungsgemäßen elektrischen Maschine weist der Kanal eine Tragstruktur zur Aufnahme der Gewichtskraft das Stators und zur Einleitung dieser Gewichtskraft in den Standfuß auf. So kann der Kanal unterschiedliche Funktionen erfüllen und neben der Führung eines Kühlmediums, der zumindest teilweisen Aufnahme der Rohre auch der konstruktiven Stabilität der elektrischen Maschine dienen.

In einer Ausgestaltung der elektrischen Maschine ist der Kanal stirnseitig geschlossen, wobei das Rohr oder die Rohre den Kanal stirnseitig durchdringen.

Die elektrische Maschine kann einen oder mehrere Kanäle mit Rohren aufweisen. Befinden sich die Kanäle im Bereich der Standfüße der elektrischen Maschine, so weist diese insbesondere zwei Kanäle mit Rohren auf.

In einer Ausgestaltung der elektrischen Maschine ist der Kanal axial unterschiedlich lang, wobei insbesondere die axiale Länge zum Stator hin zunimmt. Dadurch kann sich der Kanal zu den Stirnseiten des Statorpaketes öffnen.

In einer Ausgestaltung der elektrischen Maschine sind in dem Kanal eine Vielzahl von Rohre. Dadurch kann die Oberfläche für einen Wärmeübergang im Kanal zwischen den Kühlmedien groß gehalten werden.

In einer Ausgestaltung der elektrischen Maschine weist diese zumindest zwei Kanäle in einem Befestigungsbereich der elektrischen Maschine auf. Damit braucht der Schwerpunkt der elektrischen Maschine nicht ungünstig verlagert werden.

In einem erfindungsgemäßen Verfahren zur Kühlung einer elektrischen Maschine wird ein erstes Kühlmedium (z.B. ein Gas wie Luft, oder eine Flüssigkeit wie Wasser) in einem Kühlkreislauf innerhalb der elektrischen Maschine geführt, wobei ein zweites Kühlmedium (z.B. ein Gas wie Luft, oder eine Flüssigkeit wie Wasser) durch die elektrische Maschine geführt wird, wobei das erste Kühlmedium insbesondere durch einen Rotor und/oder einen Stator der elektrischen Maschine geführt wird.

Für das Verfahren wird eine elektrische Maschine in einer der obig beschriebenen Ausführungen oder in einer nachfolgend beschriebenen Ausführung verwendet.

Durch die beschriebenen Ausführungen der elektrischen Maschine bzw. durch die beschriebenen Verfahren gelingt es eine verbesserte Kühlung der elektrischen Maschine zu erreichen. Maßgebliche Faktoren für eine gute Kühlung sind insbesondere die am Wärmeübergang beteiligten Oberflächen und Wandstärken. So kann insbesondere durch eine Integration eines oder mehrerer dünnwandiger Rohre z.B. in den Innenluftkanal der elektrischen Maschine die Kühlung verbessert werden. Die Rohre werden von einem Kühlmedium durchströmt. Durch Abdichtung der Rohre zu den Wänden des Innenluftkanals bleibt die Schutzart der Maschine erhalten. Der Wärmeübergang zur Kühlung der Innenluft findet so zusätzlich auch über die Wände der Rohre statt. Die Führung des Kühlmediums durch den Innenluftkanal führt zu einem Hybridkonzept durch Kombination von Röhrenkühlung und Oberflächenkühlung. Die Oberflächenkühlung erfolgt beispielsweise durch Kühlrippen am Gehäuse der elektrischen Maschine.

Mit diesem Kühlkonzept können einzelne oder in Kombination verschiedene Vorteile erzielt werden. So kann eine signifikante Steigerung der Wärmeabfuhr ohne zusätzliche Kühlaggregate oder Kühlmodule erreicht werden. Es können sich auch Optimierungsmöglichkeiten der Kühlung durch Variation von Größe, Form und Anzahl der Kühlkanäle bzw. der Kühlrohre ergeben.

Dadurch ist es nicht nur möglich Kostenvorteile (€/kW) zu erzielen, sondern auch eine bessere Materialausnutzung (insbesondere für das Aktivteil, also bei einer Asynchronmaschine den Stator) zu erreichen. Es ist möglich mehr Kühlfläche ohne zusätzlichen Platzbedarf zu erreichen bzw. eine Reduktion des Materialeinsatzes pro Kühlfläche zu erzielen. Dies kann zu einer höheren Leistungsausbeute der Maschine führen. Die elektrische Maschine kann zur Verbesserung der Kühlleistung einen Innenlüfter und/oder einen Außenlüfter aufweisen. Der oder die Lüfter sind Eigenlüfter und/oder Fremdlüfter.

In einer Ausgestaltung des Verfahrens zur Kühlung der elektrischen Maschine wird das Rohr bzw. werden die Rohre in der gleichen Richtung durchströmt, wie dieses bzw. diese auch umströmt sind. Die entgegengesetzte Richtung ist auch möglich. Das Rohr wird dann in dieser Ausführungsform des Verfahrens in der entgegengesetzten Richtung durchströmt, wie es umströmt wird.

In einer Ausgestaltung des Verfahrens zur Kühlung der elektrischen Maschine wird das Rohr bzw. werden die Rohre in der umgekehrten Richtung durchströmt, wie dieses bzw. diese umströmt sind.

In einer Ausgestaltung des Verfahrens zur Kühlung der elektrischen Maschine wird als erstes Kühlmedium ein gasförmiges Kühlmedium verwendet, wobei als zweites Kühlmedium ein gasförmiges oder ein flüssiges Kühlmedium verwendet wird, wobei insbesondere der Stator überwiegend über Kühlrippen gekühlt wird. Die Kühlung des Läufers (Rotors) erfolgt somit dann überwiegend über die Rohre welche durchströmt und umströmt werden.

Nachfolgend wird die Erfindung beispielhaft an Hand von Figuren beschrieben. Dabei zeigt:
- FIG 1: ein Gehäuse einer elektrischen Maschine im Querschnitt;
- FIG 2: ein Gehäuse einer elektrischen Maschine in einer Seitendarstellung;
- FIG 3: ein Gehäuse einer elektrischen Maschine in einem perspektivischen Querschnitt;
- FIG 4: ein Gehäuse einer elektrischen Maschine in einem Längsschnitt; und
- FIG 5: einen Ausschnitt eines Schnittes durch eine elektrische Maschine.

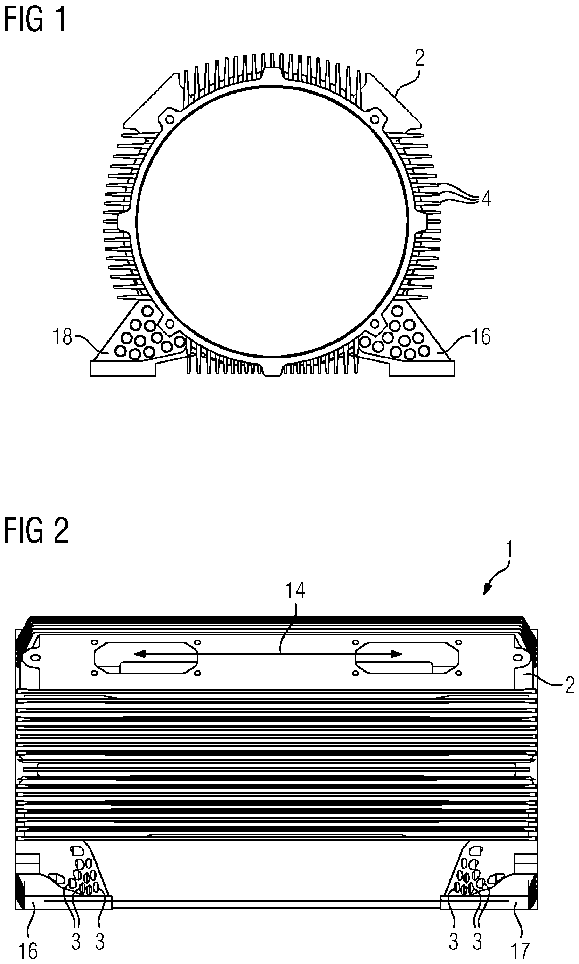

Die Darstellung nach FIG 1 zeigt im Querschnitt ein Gehäuse 2 einer elektrischen Maschine, wobei das Gehäuse 2 Kühlrippen 4 und Standfüße 16 und 18 aufweist. Die Standfüße 16 und 18 weisen eine Vielzahl von Löchern auf, durch welche Rohre für ein Kühlsystem eingeführt werden können. Die Rohre, welche beispielsweise in FIG 2 dargestellt sind, schließen mit den Löchern dicht ab. Die Standfüße bekommen neben Ihrer bisherigen Funktion der Befestigung der elektrischen Maschine nun eine weitere, nämlich die Rohre (Kühlrohre) zur Kühlung der elektrischen Maschine zu tragen und/oder einen Kanal (Kühlkanal) abzuschließen bzw. zu begrenzen.

Die Darstellung nach FIG 2 zeigt ein Gehäuse 2 einer elektrischen Maschine 1 in einer Seitendarstellung. Im Bereich der Standfüße 16 und 17 der elektrischen Maschine 1 sind die aus den Standfüßen 16 und 17 austretenden Rohre 3 gezeigt. Die Rohre 3 sind dafür vorgesehen, dass innerhalb der elektrischen Maschine diese von einem ersten Kühlmedium umströmt werden und von außen mit einem zweiten Kühlmedium beschickt werden, damit dieses zweite Kühlmedium die Rohre durchströmt. Innerhalb der elektrischen Maschine 1 ist ein Bypass 14 vorgesehen, mittels dessen das erste Kühlmedium zwischen den Stirnseiten der elektrischen Maschine 1 kommunizieren kann.

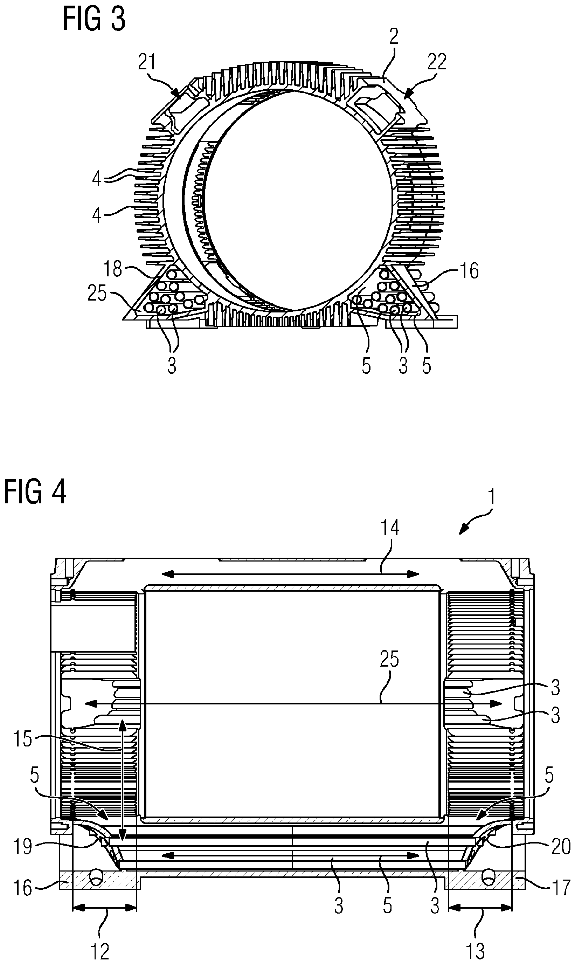

Die Darstellung nach FIG 3 zeigt das Gehäuse 2 der elektrischen Maschine 1 in einem perspektivischen Querschnitt. Die Rohre 3 sind dabei in Kanälen 5 und 25 geführt. Der Kanal 5 endet bzw. beginnt im Bereich des Standfußes 16. Der Kanal 25 endet bzw. beginnt im Bereich des Standfußes 18. In den Kanälen 5, 25 sind die Rohre geführt. Die Röhren 3 sind im Betrieb der elektrischen Maschine der Länge nach vom ersten Kühlmedium durchströmt. Über Anschlusslöcher 21 und 22 kann ein Klemmkasten angeschlossen werden. Es ist auch möglich über die Anschlusslöcher 21 und 22 Kabeldurchführungen vorzusehen bzw. eine Verkabelung vorzunehmen.

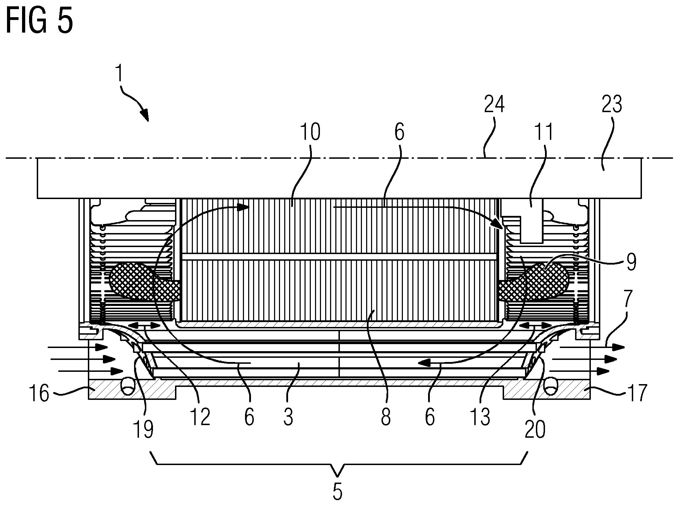

Die Darstellung nach FIG 4 zeigt in einem Längsschnitt das Gehäuse 2 der elektrischen Maschine 1. Gezeigt sind die beiden Kanäle 5 und 25, in welche die Rohre 3 ragen. Die Kanäle 5 und 25 sind im Bereich der Stirnseiten eines Statorblechpaketes bzw. im Bereich von Wickelköpfen (beides in FIG 5 dargestellt) geöffnet. Über den Bypass 14 kann auch in einem Bereich der elektrischen Maschine, welche den Standfüßen entgegengesetzt das erste Kühlmedium in axialer Richtung geführt werden. Im Bereich einer Stirnseite des Statorblechpaketes kann über einen Bypass 15 das Kühlmedium von einem Standfußbereich zum gegenüberliegenden Standfußbereich auf der gleichen Stirnseite geführt werden. Der Kanal 5 weist eine erste Öffnung 12 im Bereich des Standfußes 16 auf. Die Öffnung 12 ist zur Stirnseite der elektrischen Maschine gerichtet. Der Kanal 5 ist also zu einem Bereich offen, welcher z.B. einen Wickelkopf der elektrischen Maschine aufweist. Der Kanal 5 weist zudem eine zweite Öffnung 13 im Bereich des Standfußes 17 auf. Auch die Öffnung 13 ist zur Stirnseite der elektrischen Maschine gerichtet. Der Kanal 5 ist also auch hier zu einem Bereich offen, welcher z.B. einen Wickelkopf der elektrischen Maschine aufweist. Der Kanal 5, wie auch der hier nicht dargestellte Kanal 25 weist in einem stirnseitigen Bereich der elektrischen Maschine im Bereich des Standfußes 16 einen Verschluss 19 auf. Durch den Verschluss 19 des Kanals 5 treten die Rohre 3 hindurch. Im Bereich des Standfußes 17 weist der Kanal 5 einen stirnseitigen Verschluss 20 auf, durch welchen die Rohre 3 hindurch treten.

Die Darstellung nach FIG 5 zeigt einen weiteren Aspekt der elektrischen Maschine 1. Nach FIG 5 ist ein Ausschnitt eines Schnittes durch die elektrische Maschine 1 gezeigt, wobei neben einer Welle 23 mit einer Achse 24 auch schematisch ein Rotorblechpaket 10 und ein Statorblechpaket 8 gezeigt sind. Der Rotor der elektrischen Maschine 1 weist im vorliegenden Beispiel stirnseitig einen Lüfter 11 auf. Der Stator der elektrischen Maschine weist stirnseitig Wickelköpfe 9 und 26 auf. Über diese Wickelköpfe 9 und 26 wird in einem Kühlkreislauf 6 das erste Kühlmittel 6 geführt, welches über den Kanal 5 von einer Stirnseite der elektrischen Maschine zur gegenüberliegenden Stirnseite geführt ist. Im Kanal 5 befinden sich die Rohre 3 welche vom ersten Kühlmedium 6 umströmt werden und von dem zweiten Kühlmedium 7 durchströmt werden. Über die Rohre 3 gibt das erste Kühlmedium 6 Wärmeenergie an das zweite Kühlmedium 7 ab. Das erste Kühlmedium 6 ist beispielsweise gasförmig und das zweite Kühlmedium 7 beispielsweise eine Flüssigkeit. Das erste und das zweite Kühlmedium 6, 7 sind voneinander getrennt und mischen sich nicht.

## Patentansprüche

1. Elektrische Maschine (1) mit einem Gehäuse (2) und mit einem Rohr (3), wobei das Rohr (3) in einem Kanal (5,25) ist, wobei das Rohr (3) von einem ersten Kühlmedium (6) umströmbar ist und von einem zweiten Kühlmedium (7) durchströmbar ist, **dadurch gekennzeichnet, dass** ein Bypass (14,15) zur Führung des ersten Kühlmediums (6) vorgesehen ist, über den in einem Bereich, welcher einem Standfuß (15,16,17) der elektrischen Maschine entgegengesetzt ist, das erste Kühlmedium in axialer Richtung zwischen den Stirnseiten der elektrischen Maschine kommunizieren kann, wobei der Bypass kein Rohr aufweist, wobei der Kanal (5,25) eine Tragstruktur zur Aufnahme der Gewichtskraft des Stators und zur Einleitung dieser Gewichtskraft in den Standfuß (16,17,18) ist, wobei zwischen Standfuß (15,16,17) und Statorblechpaket (8) zumindest teilweise der Kanal (5,25) ist.

2. Elektrische Maschine (1) nach Anspruch 1, wobei die Länge des Rohres (3) gleich oder größer der Länge eines Statorpaketes (8) ist.

3. Elektrische Maschine (1) nach Anspruch 1 oder 2, wobei die Länge des Kanals (5,25) gleich oder größer der Länge des Statorpaketes (8) ist.

4. Elektrische Maschine (1) nach einem der Ansprüche 1 bis 3, wobei der Kanal (5) eine erste Öffnung (12) im Bereich einer ersten Stirnseite der elektrischen Maschine (1) bzw. des Stators der elektrischen Maschine (1) und eine zweite Öffnung (13) im Bereich einer zweiten Stirnseite der elektrischen Maschine (1) bzw. des Stators der elektrischen Maschine (1) aufweist.

5. Elektrische Maschine (1) nach einem der Ansprüche 1 bis 4, wobei das Gehäuse (2) in Umfangsrichtung Kühlrippen (4) aufweist, wobei insbesondere der Kanal (5,25) zwischen Kühlrippen (4) ist.

6. Elektrische Maschine (1) nach einem der Ansprüche 1 bis 5, wobei eine Kanalwand des Kanals (5,25) eine Außenwand der elektrischen Maschine (1) ist.

7. Elektrische Maschine (1) nach einem der Ansprüche 1 bis 6, wobei der Kanal (5,25) stirnseitig (19,20) geschlossen ist, wobei das Rohr (3) den Kanal (5,25) stirnseitig durchdringt.

8. Elektrische Maschine (1) nach einem der Ansprüche 1 bis 7, wobei der Kanal (5,25) axial unterschiedlich lang ist, wobei die axiale Länge zum Stator hin zunimmt.

9. Elektrische Maschine (1) nach einem der Ansprüche 1 bis 8, wobei in dem Kanal (5) eine Vielzahl von Rohren (3) sind.

10. Elektrische Maschine (1) nach einem der Ansprüche 1 bis 9 mit zumindest zwei Kanälen (5,25) in einem Befestigungsbereich (16,17,18) der elektrischen Maschine (s).

11. Verfahren zur Kühlung einer elektrischen Maschine (1) wobei ein erstes Kühlmedium (6) in einem Kühlkreislauf innerhalb der elektrischen Maschine (1) geführt wird, wobei ein zweites Kühlmedium (7) durch die elektrische Maschine geführt wird, wobei das erste Kühlmedium (6) durch einen Rotor (3) der elektrischen Maschine (1) geführt wird, wobei innerhalb der elektrischen Maschine (1) ein Bypass (14) vorgesehen ist, mittels dessen das erste Kühlmedium zwischen den Stirnseiten der elektrischen Maschine (1) kommunizieren kann, wobei als elektrische Maschine (1) eine elektrische Maschine (1) nach einem der Ansprüche 1 bis 10 verwendet wird.

12. Verfahren nach Anspruch 11, wobei das Rohr (3) in der gleichen Richtung durchströmt, wie auch umströmt wird oder das Rohr (3) in der entgegengesetzten Richtung durchströmt wird, wie es umströmt wird.

13. Verfahren nach Anspruch 11 oder 12, wobei als erstes Kühlmedium (6) ein gasförmiges Kühlmedium verwendet wird, wobei als zweites Kühlmedium ein gasförmiges oder ein flüssiges Kühlmedium verwendet wird, wobei der Stator (8) überwiegend über Kühlrippen (4) gekühlt wird.

## Claims

1. Electrical machine (1) comprising a housing (2) and a tube (3), wherein the tube (3) is in a channel (5,25), wherein a first coolant (6) can flow round the tube (3) and a second coolant (7) can flow through said tube, **characterised in that** a bypass (14,15) is provided to conduct the first coolant (6), by means of which the first coolant can communicate in the axial direction between the end faces of the electrical machine in a region opposite a supporting foot (15,16,17) of the electrical machine, wherein the bypass does not have a tube, wherein the channel (5,25) is a support structure to absorb the weight force of the stator and to introduce this weight force into the supporting foot (16,17,18), wherein the channel (5,25) is at least partially between the supporting foot (15,16,17) and the stator lamination stack (8).

2. Electrical machine (1) according to claim 1, wherein the length of the tube (3) is equal to or greater than the length of a stator lamination (8).

3. Electrical machine (1) according to claim 1 or 2, wherein the length of the channel (5,25) is equal to or greater than the length of the stator lamination (8).

4. Electrical machine (1) according to one of claims 1 to 3, wherein the channel (5) has a first opening (12) in the region of a first end face of the electrical machine (1) or the stator of the electrical machine (1) and a second opening (13) in the region of a second end face of the electrical machine (1) or the stator of the electrical machine (1).

5. Electrical machine (1) according to one of claims 1 to 4, wherein the housing (2) comprises cooling fins (4) in the circumferential direction, wherein in particular the channel (5,25) is between cooling fins (4).

6. Electrical machine (1) according to one of claims 1 to 5, wherein a channel wall of the channel (5,25) is an outer wall of the electrical machine (1).

7. Electrical machine (1) according to one of claims 1 to 6, wherein the channel (5,25) is closed at the end face (19,20), wherein the tube (3) penetrates the channel (5,25) at the end face.

8. Electrical machine (1) according to one of claims 1 to 7, wherein the channel (5,25) has a variable axial length, wherein the axial length increases toward the stator.

9. Electrical machine (1) according to one of claims 1 to 8, wherein there is a plurality of tubes (3) in the channel (5).

10. Electrical machine (1) according to one of claims 1 to 9 with at least two channels (5,25) in an attachment region (16,17,18) of the electrical machine (s).

11. Method for cooling an electrical machine (1), wherein a first coolant (6) is conducted in a coolant circuit within the electrical machine (1), wherein a second coolant (7) is conducted through the electrical machine, wherein the first coolant (6) is conducted through a rotor (3) of the electrical machine (1), wherein a bypass (14) is provided within the electrical machine (1) by means of which the first coolant can communicate between the end faces of the electrical machine (1), wherein an electrical machine (1) according to one of claims 1 to 10 is used as the electrical machine (1).

12. Method according to claim 11, wherein the flow through the tube (3) takes place in the same direction as the flow round said tube or the flow through the tube (3) takes place in the opposite direction to the flow round said tube.

13. Method according to one of claims 11 or 12, wherein a gaseous coolant is used as the first coolant (6), wherein a gaseous or liquid coolant is used as the second coolant, wherein the stator (8) is predominantly cooled by cooling fins (4) .

## Revendications

1. Machine (1) électrique ayant une carcasse (2) et ayant un tuyau (3), dans lequel le tuyau (3) est dans un conduit (5,25), un premier fluide (6) de refroidissement pouvant passer autour du tuyau (3) et un deuxième fluide (7) de refroidissement pouvant passer dans le tuyau (3),
**caractérisée en ce qu'**il est prévu une dérivation (14, 15) pour conduire le premier fluide (6) de refroidissement, par laquelle, dans une partie, qui est opposée à un pied (15, 16, 17) montant de la machine électrique, le premier fluide de refroidissement peut passer dans la direction axiale entre les côtés frontaux de la machine électrique, la dérivation n'ayant pas de tuyau, dans laquelle le conduit (5, 25) est une structure portante pour absorber le poids du stator et pour appliquer ce poids au pied (16, 17, 18) montant, dans laquelle le conduit (5, 25) étant, au moins en partie, entre le pied (15, 16, 17) montant et un paquet (8) de tôles statoriques.

2. Machine (1) électrique suivant la revendication 1, dans laquelle la longueur du tuyau (3) est supérieure ou égale à la longueur d'un paquet (8) statorique.

3. Machine (1) électrique suivant la revendication 1 ou 2, dans laquelle la longueur du conduit (5, 25) est supérieure ou égale à la longueur du paquet (8) statorique.

4. Machine (1) électrique suivant l'une des revendications 1 à 3, dans laquelle le conduit (5) a une première ouverture (12) dans la partie d'un premier côté frontal de la machine (1) électrique ou du stator de la machine (1) électrique, et une deuxième ouverture (13) dans la partie d'un deuxième côté frontal de la machine (1) électrique ou du stator de la machine (1) électrique.

5. Machine (1) électrique suivant l'une des revendications 1 à 4, dans laquelle la carcasse (2 ) a, dans la direction périphérique, des ailettes (4 ) de refroidissement, le conduit (5, 25) étant notamment entre des ailettes (4 ) de refroidissement.

6. Machine (1) électrique suivant l'une des revendications 1 à 5, dans laquelle une paroi du conduit (5, 25) est une paroi extérieure de la machine (1) électrique.

7. Machine (1) électrique suivant l'une des revendications 1 à 6, dans laquelle le conduit (5, 25) est fermé du côté (19, 20) frontal, le tuyau (3) pénétrant du côté frontal dans le conduit (5, 25).

8. Machine (1) électrique suivant l'une des revendications 1 à 7, dans laquelle le conduit (5, 25) est d'une longueur différente axialement, la longueur axiale augmentant vers le stator.

9. Machine (1) électrique suivant l'une des revendications 1 à 8, dans laquelle il y a une pluralité de tuyaux (3) dans le conduit (5).

10. Machine (1) électrique suivant l'une des revendications 1 à 9, comprenant au moins deux conduits (5, 25) dans une partie (16, 17, 18) de fixation de la machine (s) électrique.

11. Procédé de refroidissement d'une machine (1) électrique, dans lequel on fait passer un premier fluide (6) de refroidissement dans un circuit de refroidissement à l'intérieur de la machine (1) électrique, on fait passer un deuxième fluide (7) de refroidissement dans la machine électrique, on fait passer le premier fluide (6) de refroidissement dans un rotor (3) de la machine (1) électrique, dans lequel il est prévu, à l'intérieur de la machine (1) électrique, une dérivation (14), au moyen de laquelle le premier fluide de refroidissement peut communiquer entre les côtés frontaux de la machine (1) électrique, dans lequel on utilise, comme machine (1) électrique, une machine (1) électrique suivant l'une des revendications 1 à 10.

12. Procédé suivant la revendication 11, dans lequel le tuyau (3) est parcouru dans le même sens que celui dans lequel un courant passe autour de lui, ou le tuyau (3) est parcouru dans le sens contraire à celui dans lequel un courant passe autour de lui.

13. Procédé suivant la revendication 11 ou 12, dans lequel on utilise, comme premier fluide (6) de refroidissement, un fluide de refroidissement gazeux, dans lequel on utilise, comme deuxième fluide de refroidissement un fluide de refroidissement gazeux ou un fluide de refroidissement liquide, le stator (8) étant refroidi principalement par de ailettes (4 ) de refroidissement.
